# EUROPEAN PATENT APPLICATION

(11) **EP 4 467 524 A1**
(43) Date of publication of application: **27.11.2024**
(21) Application number: 23743291.9
(22) Date of filing: 18.01.2023
(51) Int. Cl.: C03C 27/12, B32B 17/10

(54) **INTERLAYER FILM FOR LAMINATED GLASS, AND LAMINATED GLASS**

(30) Priority: 19.01.2022 JP 2022006750
(71) Applicant: SEKISUI CHEMICAL CO., LTD., Osaka-shi Osaka 530-8565 (JP)
(72) Inventor: NOHARA, Atsushi, Koka-shi, Shiga 528-8585 (JP); NAKAYAMA, Kazuhiko, Koka-shi, Shiga 528-8585 (JP)
(74) Representative: Ter Meer Steinmeister & Partner
(86) International application number: PCT/JP2023/001398
(87) International publication number: WO 2023/140298

(57) **Abstract**

An interlayer film for laminated glass, including a thermoplastic resin and a filler (A) having visible light reflection performance.

## Description

### Technical Field

The present invention relates to an interlayer film for laminated glass, and laminated glass having an interlayer film for laminated glass.

### Background Art

Laminated glass is widely used for window glass for various conveyances such as automobiles and window glass for buildings and the like because even if laminated glass is subjected to an external impact and broken, pieces of the broken glass rarely scatter and provides safety. As the laminated glass, laminated glass in which an interlayer film for laminated glass including a resin component such as a polyvinyl acetal resin is interposed between a pair of glasses and integrated is widely known.

It is known that for laminated glass, for the purpose of enhancing heat ray blocking ability and aesthetic appearance, metal particles and brighteners such as metallic pigments are blended into interlayer films. For example, Patent Literature 1 discloses an interlayer film for laminated glass including a metal flat-plate particle-containing layer, in which silver flat-plate nanoparticles and the like are used as metal flat-plate particles. Patent Literature 2 discloses an interlayer film for laminated glass, including polyvinyl butyral, a plasticizer, and a metallic pigment. Patent Literature 2 shows a plate-shaped mica pigment covered with metal oxide, as one example of the metallic pigment.

Patent Literature 3 discloses an interlayer film for laminated glass, including flat plate-shaped metal particles formed from metal such as silver, and shows that the flat plate-shaped metal particles may be covered with metal oxide.

### Citation List

### Patent Literatures

PTL1: WO 2019/003783
PTL2: WO 2016/028963
PTL3: JP 2014-191224 A

### Summary of Invention

### Technical Problem

In recent years, window glass for automobiles or buildings has been progressively diversified in designs, and, for example, has been sometimes demanded to exhibit a metallic feeling in order to achieve the unity with a metallic body for automobiles. For example, as disclosed in Patent Literatures 1 to 3, use of window glass in which a brightener is blended into an interlayer film is considered for exhibition of a metallic feeling. However, a brightener used in a conventional interlayer film has a high reflectance of visible light and has a difficulty in allowing both transparency and a metallic feeling to be achieved.

Accordingly, an object of the present invention is to provide an interlayer film for laminated glass which can achieve both transparency and a metallic feeling.

### Solution to Problem

As a result of diligent studies, the present inventors have found that the object can be achieved by using a particular filler in an interlayer film, and completed the present invention below. Specifically, the present invention provides the following [1] to [26].
[1] An interlayer film for laminated glass, including a thermoplastic resin and a filler (A) having visible light reflection performance.
[2] The interlayer film for laminated glass according to the above [1], wherein the filler (A) includes two or more metal oxides.
[3] The interlayer film for laminated glass according to the above [2], wherein the two or more metal oxides have refractive indexes different from each other.
[4] The interlayer film for laminated glass according to the above [3], wherein a refractive index difference between the metal oxides having different refractive indexes from each other is 0.1 or more and 1.2 or less.
[5] The interlayer film for laminated glass according to any one of the above [2] to [4], wherein the two or more metal oxides are each selected from the group consisting of titanium oxide, silicon oxide, indium oxide, niobium oxide, zinc oxide, antimony oxide, and tungsten oxide.
[6] The interlayer film for laminated glass according to the above [5], wherein the filler (A) contains both titanium oxide and silicon oxide.
[7] The interlayer film for laminated glass according to any one of the above [2] to [6], wherein the filler (A) has a multilayer structure of the metal oxides.
[8] The interlayer film for laminated glass according to the above [7], wherein a thickness ratio between layers formed by metal oxides different from each other is 1:2 to 1:15 in the filler (A).
[9] The interlayer film for laminated glass according to any one of the above [1] to [8], including a resin layer including the filler (A) and the thermoplastic resin, wherein a content of the filler (A) in the resin layer is 0.01% by mass or more and 0.5% by mass or less.
[10] The interlayer film for laminated glass according to any one of the above [1] to [9], wherein the filler (A) has a flat plate shape.
[11] The interlayer film for laminated glass according to the above [10], wherein the filler (A) having a flat plate shape has a three-layer structure including a medium layer and covering layers provided on both surfaces of the medium layer.
[12] The interlayer film for laminated glass according to the above [11], wherein a refractive index of a metal oxide forming the covering layers is higher than a refractive index of the medium layer.
[13] The interlayer film for laminated glass according to the above [11] or [12], wherein both the covering layers are titanium oxide layers and the medium layer is a silicon oxide layer.
[14] The interlayer film for laminated glass according to any one of the above [1] to [13], wherein an average particle diameter (D50) of the filler (A) is 1 µm or more and 20 µm or less.
[15] The interlayer film for laminated glass according to any one of the above [1] to [14], wherein the thermoplastic resin is at least one selected from the group consisting of a polyvinyl acetal resin and an ethylene-vinyl acetate copolymer resin.
[16] The interlayer film for laminated glass according to the above [15], wherein the polyvinyl acetal resin is a polyvinyl butyral resin.
[17] The interlayer film for laminated glass according to the above [15] or [16], wherein an amount of hydroxyl groups in the polyvinyl acetal resin is 15 mol % or more.
[18] The interlayer film for laminated glass according to any one of the above [15] to [17], wherein a degree of acetalization of the polyvinyl acetal resin is 47 mol % or more.
[19] The interlayer film for laminated glass according to any one of the above [15] to [18], wherein a degree of acetylation of the polyvinyl acetal resin is 30 mol % or less.
[20] The interlayer film for laminated glass according to any one of the above [1] to [19], wherein the interlayer film for laminated glass includes a single-layer resin layer.
[21] The interlayer film for laminated glass according to any one of the above [1] to [19], wherein the interlayer film for laminated glass has a multilayer structure including a plurality of resin layers.
[22] The interlayer film for laminated glass according to [21], wherein at least one resin layer constituting the multilayer structure is a filler-containing resin layer containing the filler (A).
[23] The interlayer film for laminated glass according to any one of the above [1] to [22], wherein a ratio (Rv/Hz) of a visible light reflectance (Rv) to a haze (Hz), measured for laminated glass made by adhering two clear glass plates to each other via the interlayer film for laminated glass, is 2 or more and 10 or less.
[24] The interlayer film for laminated glass according to any one of the above [1] to [23], wherein a haze value (Hz) measured for laminated glass made by adhering two clear glass plates to each other via the interlayer film for laminated glass is 20% or less.
[25] The interlayer film for laminated glass according to any one of the above [1] to [24], wherein a visible light transmittance (Tv) of laminated glass made by adhering two clear glass plates to each other via the interlayer film is 30% or more.
[26] A Laminated glass including a first laminated glass member, a second laminated glass member, and the interlayer film for laminated glass according to any one of the above [1] to [25], wherein
   the interlayer film for laminated glass is disposed between the first laminated glass member and the second laminated glass member.

### Advantageous Effects of Invention

According to the present invention, it is possible to provide an interlayer film for laminated glass which can achieve both transparency and a metallic feeling.

### Brief Description of Drawing

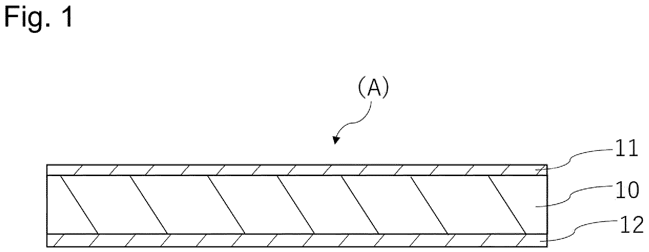

[Fig. 1] Fig. 1 is a schematic cross-sectional view showing a flat plate-shaped filler (A) having a laminated structure.

### Description of Embodiments

The present invention will be described in more detail below.

The interlayer film for laminated glass (hereinafter sometimes simply referred to as an "interlayer film") according to the present invention includes a thermoplastic resin, and a filler (A) having visible light reflection performance. The interlayer film of the present invention has a filler (A), and thus both transparency and metallic feeling can be achieved.

### [Filler (A)]

The filler (A) included in the interlayer film is a filler having visible light reflection performance. The filler (A) should be a filler including two or more metal oxides, and should have a multilayer structure of metal oxides. Here, the multilayer structure should be formed of layers formed by different metal oxides. By having a multilayer structure of metal oxides, the filler (A) has not only a lower reflectance, but also lower light absorbability and a higher transmittance, and the interlayer film easily achieves both transparency and a metallic feeling. By having a multilayer structure of metal oxides, the filler (A) not only enables reflected light to be colored, but also enables light penetrating through the interlayer film to be light having an achromatic color or a color close to an achromatic color with almost not being tinted.

The two or more metal oxides should have different refractive indexes from each other. Thanks to the metal oxides having different refractive indexes from each other, layers having different refractive indexes are formed, and thereby reflection between the layers is generated and a proper metallic feeling is easily ensured. The layers formed from such metal oxides having different refractive indexes from each other should be adjacent in the filler (A).

The refractive index difference between metal oxides having different refractive indexes from each other is preferably 0.1 or more and 1.2 or less from the viewpoint of making transparency and a metallic feeling good. The refractive index difference is more preferably 0.3 or more and 1.1 or less, and further preferably 0.6 or more and 1.05 or less.

The thickness ratio between layers formed by metal oxides different from each other is preferably 1:2 to 1:15 in the filler (A) having a multilayer structure. By having such a thickness ratio, the filler (A) easily achieves a metallic feeling. The thickness ratio is more preferably 1:3 to 1:13 and further preferably 1:4 to 1:11. The filler (A) can also be controlled in thickness ratio to result in the change in color of reflected light.

The thickness ratio is an average value of values measured by observation of any 50 particles with a scanning electron microscope (SEM) or the like.

Each of the two or more metal oxides should be selected from the group consisting of titanium oxide, silicon oxide, indium oxide, niobium oxide, zinc oxide, antimony oxide, and tungsten oxide, and in particular, titanium oxide and silicon oxide are preferred. The titanium oxide is titanium dioxide (TiO₂), and may be of rutile type, anatase type, or brookite type. The silicon oxide is silicon dioxide (SiO₂).

The filler (A) more preferably contains both titanium oxide and silicon oxide, and further preferably has a multilayer structure of a titanium oxide layer and a silicon oxide layer.

The filler (A) is preferably in the form of metal oxide particles having a multilayer structure formed from two or more metal oxides, as described above, and is preferably in the form of particles in which metal oxide particles (medium layer described later) composed of at least one metal oxide are covered with at least one different metal oxide.

The shape of the filler (A) may be any shape of a spherical shape, a multangular shape such as a quadrangular prism shape, a polygonal pyramid shape such as a triangular pyramid shape or a quadrangular pyramid, a columnar shape, a circular cone shape, an indefinite shape, a needle shape, a fibrous form, a flat plate shape, and the like, and is preferably a flat plate shape. When the filler (A) has a flat plate shape, the filler (A) is oriented along with the surface direction of the interlayer film as described later and thus not only a certain amount of the incident visible light is reflected, but also the transparency of the interlayer film is easily increased. In addition, regular reflection is unlikely to cause light scattering and easily decreases the haze of laminated glass.

When a flat plate-shaped filler (A) has the above multilayer structure, a plurality of layers is preferably provided along with a thickness direction, and preferably 2 to 5 layers, more preferably 2 to 4 layers, further preferably 3 layers are provided along with the thickness direction.

Fig. 1 shows a specific example of a flat plate-shaped filler (A) of a three-layer structure. When the filler (A) is a three-layer structure, the filler should include a medium layer 10 and covering layers 11 and 12 provided on both surfaces of the medium layer 10 as shown in Fig. 1. The metal oxide constituting each of the covering layers 11 and 12 should be different from the metal oxide forming the medium layer 10. The metal oxides forming the covering layers 11 and 12 are preferably the same from each other.

The refractive index of the metal oxide forming each of the covering layers 11 and 12 is preferably higher than the refractive index of the medium layer 10. By setting relatively high refractive indexes of the covering layers 11 and 12, light is transmitted with being properly reflected and both the transparency and metallic feeling of the interlayer film are easily made good. In addition, a three-layer structure and higher refractive indexes of the metal oxides of the covering layers 11 and 12 than the refractive index of the medium layer 10 allow incident light from any of both surfaces to be properly reflected, and thus not only transparency can be more effectively ensured, a metallic feeling can be exhibited. Here, the preferred values of the difference between the refractive index of each of the covering layers 11 and 12 and the refractive index of the medium layer 10 are as described above.

The respective thicknesses of the covering layers 11 and 12 are preferably smaller than the thickness of the medium layer 10. Preferred values of a specific thickness ratio (each covering layer : medium layer) are as shown with respect to the thickness ratio between such layers.

In the flat plate-shaped filler (A), particularly preferably, the covering layers 11 and 12 are each a titanium oxide layer and the medium layer 10 is a silicon oxide layer. The flat plate-shaped filler (A) is not limited to the above having a three-layer structure, and may have a two-layer structure, and in that case, one of the covering layers 11 and 12 may be omitted. A multilayer structure of four or more layers may also be adopted.

The average particle diameter (D50) of the filler (A) is preferably 1 µm or more and 20 µm or less. By setting the average particle diameter within the range, not only both transparency and a metallic feeling are achieved, but also light scattering in the interlayer film is easily suppressed. The average particle diameter (D50) of the filler (A) is preferably 3 µm or more and 18 µm or less, and more preferably 5 µm or more and 16 µm or less. The average particle diameter (D50) is a value measured with a laser diffraction/scattering type particle size distribution measurement apparatus, and the value (D50) at a cumulative volume of 50% is defined as the average particle diameter.

The thickness of the filler (A) is preferably 0.01 µm or more and 4 µm or less, more preferably 0.1 µm or more and 2 µm or less, and further preferably 0.2 µm or more and 1 µm or less from the viewpoint of suppression of light scattering and both a metallic feeling and transparency being made better. The thickness of the filler (A) is an average value of values measured by observation of any 50 particles with a scanning electron microscope (SEM) or the like. The thickness of the filler (A) should be a length in a direction in which the maximum value among lengths in a direction perpendicular to the longitudinal direction of the filler is the shortest, and the thickness of the flat plate-shaped filler (A) corresponds to a vertical length in Fig. 1.

The aspect ratio of the filler (A) is preferably 1 or more, more preferably 2 or more and further preferably 4 or more, and preferably 30 or less, more preferably 15 or less and further preferably 5 or less. When the aspect ratio is the above, a certain amount of incident visible light is reflected and also the transparency of the interlayer film is easily increased by orienting the filler (A) along with the surface direction of the interlayer film as described later. In addition, by setting the aspect ratio at 100 or less, the average particle diameter (D50) of the filler (A) can be prevented from being larger than necessary. The aspect ratio of the filler (A) is here the ratio of the length of a major axis to the length of a minor axis of the filler (A) observed with a scanning electron microscope. The major axis and the minor axis are respectively a major axis and a minor axis of the filler (A) in a plan view along with the thickness direction, and in the case of a flat plate-shaped filler, respectively correspond to a longitudinal direction and a direction perpendicular to the longitudinal direction, in the surface direction of the filler.

When the filler (A) has an orientable anisotropy as in the case of having a flat plate shape, the longitudinal direction thereof is preferably oriented so as to be along with the surface direction of the interlayer film. When the filler (A) has a flat plate shape, the surface direction thereof is preferably oriented so as to be along with the surface direction of the interlayer film. That is, the flat plate-shaped filler (A) is preferably oriented so that the thickness direction of the filler (A) is along with the thickness direction of the interlayer film. The filler (A), when has the above orientation, enables light travelling in the interlayer film along with the thickness direction to be not only appropriately reflected, but also partially transmitted, and also enables light scattering occurring in the filler (A) to be suppressed. Therefore, not only a lower haze and an enhanced transparency are achieved, but also a metallic feeling is easily exhibited.

One filler (A) may be used singly, or two or more fillers (A) may be used in combination, in the interlayer film or a filler-containing resin layer described later.

The method for producing the filler (A) is not particularly limited, and, for example, the filler (A) having a multilayer structure should be produced by covering particles formed from metal oxide, with another metal oxide. The flat plate-shaped filler (A) may also be obtained by, for example, covering a sheet formed from metal oxide, with another metal oxide, and then pulverizing the sheet. The filler (A) here used may also be a commercial product.

The interlayer film includes one or two or more resin layers, and each of the resin layers should contain a thermoplastic resin. In the interlayer film of the present invention, at least one of the plurality of resin layers includes the filler (A), in addition to the thermoplastic resin. As used herein, a resin layer containing the filler (A) is referred to as "filler-containing resin layer". The filler (A) is dispersed in the thermoplastic resin in the filler-containing resin layer, and retained in the resin layer by the thermoplastic resin.

The content of the filler (A) in the filler-containing resin layer is preferably 0.01% by mass or more and 0.5% by mass or less. When the content is 0.01% by mass or more, a proper metallic feeling can be exhibited. By setting the content at 0.5% by mass or less, light is prevented from being more reflected than necessary, to result in a lower haze and also allow the transparency of the laminated glass to be easily ensured. From these viewpoints, the content of the filler (A) is more preferably 0.02% by mass or more, further preferably 0.04% by mass or more and still further preferably 0.08% by mass or more, and more preferably 0.4% by mass or less, further preferably 0.3% by mass or less and still further preferably 0.2% by mass or less.

### [Thermoplastic Resin]

The interlayer film of the present invention contains a thermoplastic resin as described above. By containing the thermoplastic resin, the interlayer film easily serves the function as an adhesive layer, and the adhesiveness to a laminated glass member is good. The interlayer film includes one or two or more resin layers as described above, and each of the resin layers should contain a thermoplastic resin.

The thermoplastic resin in each of the resin layers, for example, the filler-containing resin layer is not particularly limited, and examples thereof include a polyvinyl acetal resin, an ethylene-vinyl acetate copolymer resin, an ionomer resin, a polyurethane resin, a thermoplastic elastomer, an acrylic resin, an acrylic-vinyl acetate copolymer resin, a polyvinyl alcohol resin, a polyolefin resin, a polyvinyl acetate resin, and a polystyrene resin. By using these resins, adhesiveness to a laminated glass member is easily ensured.

Among these, a polyvinyl acetal resin, an ethylene-vinyl acetate copolymer resin, an ionomer resin, a polyurethane resin, and a thermoplastic elastomer are preferred.

In the interlayer film of the present invention, one thermoplastic resin may be used singly, or two or more thermoplastic resins may be used in combination. When two or more thermoplastic resins are used in combination, the two or more thermoplastic resins may be contained in one resin layer, or different types of thermoplastic resins may be contained in different resin layers respectively, in the interlayer film.

Among these, at least one selected from the group consisting of a polyvinyl acetal resin and an ethylene-vinyl acetate copolymer resin is preferred, and a polyvinyl acetal resin is more preferred in terms of exhibiting excellent adhesiveness to inorganic glass, particularly when it is used in combination with a plasticizer. Therefore, also for the resin in the filler-containing resin layer, at least one selected from the group consisting of a polyvinyl acetal resin and an ethylene-vinyl acetate copolymer resin is preferred, and a polyvinyl acetal resin is more preferred.

When the interlayer film has a plurality of resin layers, the resins constituting the resin layers should be appropriately selected from the resins listed above. The resins constituting the resin layers may be different resins from each other but are preferably the same as each other.

Therefore, when the interlayer film has a plurality of resin layers, the resins constituting the resin layers are each preferably a polyvinyl acetal resin or an ethylene-vinyl acetate copolymer resin, more preferably a polyvinyl acetal resin.

### (Polyvinyl Acetal Resin)

The polyvinyl acetal resin is not particularly limited as long as it is a polyvinyl acetal resin obtained by acetalizing polyvinyl alcohol (PVA) with an aldehyde.

The aldehyde is not particularly limited, but generally, an aldehyde having 1 to 10 carbon atoms is preferably used. The aldehyde having 1 to 10 carbon atoms is not particularly limited, and examples thereof include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. These aldehydes may be used singly, or two or more of these aldehydes may be used in combination.

Among the above, n-butyraldehyde, n-hexylaldehyde, and n-valeraldehyde are preferred, and n-butyraldehyde is more preferred. Therefore, for the polyvinyl acetal resin, a polyvinyl butyral resin is preferred.

Polyvinyl alcohol (PVA) is obtained, for example, by saponifying a polyvinyl ester such as polyvinyl acetate. The degree of saponification of polyvinyl alcohol is generally 70 to 99.9 mol %. One polyvinyl acetal resin may be used singly, or two or more polyvinyl acetal resins may be used in combination.

The average degree of polymerization of PVA is preferably 200 or more, more preferably 500 or more, further preferably 1000 or more, and still further preferably 1500 or more. When the average degree of polymerization is equal to or more than the above lower limits, the penetration resistance of laminated glass increases. The average degree of polymerization of PVA is preferably 5000 or less, more preferably 4000 or less, further preferably 3500 or less, and still further preferably 2500 or less.

The average degree of polymerization of polyvinyl alcohol is obtained by a method in accordance with JIS K6726 "Testing methods for polyvinyl alcohol".

The amount of hydroxyl groups in the polyvinyl acetal resin is preferably 15 mol % or more and preferably 38 mol % or less. By setting the amount of hydroxyl groups at 15 mol % or more, the adhesiveness easily becomes good, and the penetration resistance of laminated glass, and the like are easily made good. By setting the amount of hydroxyl groups at 38 mol % or less, laminated glass is prevented from being too hard. The amount of hydroxyl groups is more preferably 20 mol % or more, further preferably 25 mol % or more, from the viewpoint of adhesiveness to laminated glass members, and the like. The amount of hydroxyl groups is more preferably 35% or less, further preferably 33 mol % or less.

Also when a polyvinyl butyral resin is used as the polyvinyl acetal resin, the amount of hydroxyl groups is 15 mol % or more and preferably 38 mol % or less, and more preferably 20 mol % or more, further preferably 25 mol % or more, and more preferably 35% mol or less, further preferably 33 mol % or less, from the same viewpoints.

The amount of hydroxyl groups in the polyvinyl acetal resin is the value, expressed in percentage, of the mole fraction obtained by dividing the amount of ethylene groups to which hydroxyl groups are bonded, by the amount of all ethylene groups in the main chain. The amount of ethylene groups to which hydroxyl groups are bonded can be measured, for example, in accordance with JIS K6728 "Testing methods for polyvinyl butyral".

The degree of acetalization of the polyvinyl acetal resin is preferably 47 mol % or more and preferably 85 mol % or less. The degree of acetalization is more preferably 55 mol % or more, further preferably 60 mol % or more, and more preferably 80 mol % or less, further preferably 75 mol % or less.

The degree of acetalization means the degree of butyralization when the acetal group is a butyral group, and the polyvinyl acetal resin (A) is a polyvinyl butyral resin.

The degree of acetalization is the value, expressed in percentage, of the mole fraction obtained by subtracting the amount of ethylene groups to which hydroxyl groups are bonded and the amount of ethylene groups to which acetyl groups are bonded from the amount of all ethylene groups in the main chain and dividing the obtained value by the amount of all ethylene groups in the main chain. The degree of acetalization (degree of butyralization) should be calculated, for example, from the results measured by a method in accordance with JIS K6728 "Testing methods for polyvinyl butyral".

The degree of acetylation of the polyvinyl acetal resin is preferably 30 mol % or less, more preferably 20 mol % or less, further preferably 10 mol % or less, and still further preferably 2 mol % or less. When the degree of acetylation is equal to or less than the upper limits, the moisture resistance of the interlayer film and laminated glass increases. The degree of acetylation is not particularly limited but is preferably 0.01 mol % or more, more preferably 0.1 mol % or more.

The degree of acetylation is the value, expressed in percentage, of the mole fraction obtained by dividing the amount of ethylene groups to which acetyl groups are bonded, by the amount of all ethylene groups in the main chain. The amount of ethylene groups to which acetyl groups are bonded can be measured, for example, in accordance with JIS K6728 "Testing methods for polyvinyl butyral".

### (Ethylene-Vinyl Acetate Copolymer Resin)

The ethylene-vinyl acetate copolymer resin may be a non-crosslinked ethylene-vinyl acetate copolymer resin and may be a high temperature crosslinked ethylene-vinyl acetate copolymer resin. As the ethylene-vinyl acetate copolymer resin, an ethylene-vinyl acetate modified product resin such as an ethylene-vinyl acetate copolymer saponified product or a hydrolysate of ethylene-vinyl acetate can also be used.

The ethylene-vinyl acetate copolymer resin preferably has a vinyl acetate content of 10 to 50% by mass, more preferably 20 to 40% by mass, as measured in accordance with JIS K 6730 "Testing methods for ethylene/vinyl acetate copolymer materials" or JIS K 6924-2: 1997. By setting the vinyl acetate content at these lower limit values or more, the adhesiveness to laminated glass members increases, and the penetration resistance of laminated glass easily becomes good. By setting the vinyl acetate content at these upper limit values or less, the breaking strength of the interlayer film increases, and the impact resistance of laminated glass is good.

### (Ionomer Resin)

The ionomer resin is not particularly limited, and various ionomer resins can be used. Specific examples include an ethylene-based ionomer, a styrene-based ionomer, a perfluorocarbon-based ionomer, a telechelic ionomer, and a polyurethane ionomer. Among these, an ethylene-based ionomer is preferred in terms of good mechanical strength, durability, transparency, and the like of laminated glass and in terms of excellent adhesiveness to laminated glass members.

As the ethylene-based ionomer, an ionomer of an ethylene-unsaturated carboxylic acid copolymer is preferably used because it is excellent in transparency and toughness. The ethylene-unsaturated carboxylic acid copolymer is a copolymer having at least a constituent unit derived from ethylene and a constituent unit derived from an unsaturated carboxylic acid and may have a constituent unit derived from another monomer.

Examples of the unsaturated carboxylic acid include acrylic acid, methacrylic acid, and maleic acid. Acrylic acid and methacrylic acid are preferred, and methacrylic acid is particularly preferred. Examples of another monomer include an acrylate, a methacrylate, and 1-butene.

The ethylene-unsaturated carboxylic acid copolymer preferably has 75 to 99 mol % of the constituent unit derived from ethylene and preferably has 1 to 25 mol % of the constituent unit derived from the unsaturated carboxylic acid, based on 100 mol % of all constituent units of the copolymer.

The ionomer of the ethylene-unsaturated carboxylic acid copolymer is an ionomer resin obtained by neutralizing or crosslinking at least some of the carboxyl groups of the ethylene-unsaturated carboxylic acid copolymer with metal ions, and the degree of neutralization of the carboxyl groups is usually 1 to 90%, preferably 5 to 85%.

Examples of the ion source for the ionomer resin include alkali metals such as lithium, sodium, potassium, rubidium, and cesium, and polyvalent metals such as magnesium, calcium, and zinc. Sodium and zinc are preferred.

The method for producing the ionomer resin is not particularly limited, and the ionomer resin can be produced by a conventionally known production method. For example, when an ionomer of an ethylene-unsaturated carboxylic acid copolymer is used as the ionomer resin, for example, ethylene and an unsaturated carboxylic acid are subjected to radical copolymerization under high temperature and high pressure to produce an ethylene-unsaturated carboxylic acid copolymer. Then, the ethylene-unsaturated carboxylic acid copolymer is reacted with a metal compound including the ion source, and thus an ionomer of the ethylene-unsaturated carboxylic acid copolymer can be produced.

### (Polyurethane Resin)

Examples of the polyurethane resin include a polyurethane obtained by reacting an isocyanate compound with a diol compound, and a polyurethane obtained by reacting an isocyanate compound, a diol compound, and further a chain extender such as a polyamine. The polyurethane resin may contain a sulfur atom. In that case, part or all of the diol should be selected from the group consisting of a polythiol and a sulfur-containing polyol. The polyurethane resin can make the adhesiveness to organic glass good. Therefore, the polyurethane resin is preferably used when the laminated glass member are organic glass.

### (Thermoplastic Elastomer)

Examples of the thermoplastic elastomer include a styrene-based thermoplastic elastomer and an aliphatic polyolefin. The styrene-based thermoplastic elastomer is not particularly limited, and a known one can be used. The styrene-based thermoplastic elastomer generally has a styrene monomer polymer block that is a hard segment, and a conjugated diene compound polymer block or its hydrogenated block that is a soft segment. Specific examples of the styrene-based thermoplastic elastomer include a styrene-isoprene diblock copolymer, a styrene-butadiene diblock copolymer, a styrene-isoprene-styrene triblock copolymer, a styrene-butadiene/isoprene-styrene triblock copolymer, a styrene-butadiene-styrene triblock copolymer, and their hydrogenated products.

The above aliphatic polyolefin may be a saturated aliphatic polyolefin or an unsaturated aliphatic polyolefin. The aliphatic polyolefin may be a polyolefin including a chain olefin as a monomer, or a polyolefin including a cyclic olefin as a monomer. From the viewpoint of effectively enhancing the storage stability and sound insulation properties of the interlayer film, the aliphatic polyolefin is preferably a saturated aliphatic polyolefin.

Examples of the material of the aliphatic polyolefin include ethylene, propylene, 1-butene, trans-2-butene, cis-2-butene, 1-pentene, trans-2-pentene, cis-2-pentene, 1-hexene, trans-2-hexene, cis-2-hexene, trans-3-hexene, cis-3-hexene, 1-heptene, trans-2-heptene, cis-2-heptene, trans-3-heptene, cis-3-heptene, 1-octene, trans-2-octene, cis-2-octene, trans-3-octene, cis-3-octene, trans-4-octene, cis-4-octene, 1-nonene, trans-2-nonene, cis-2-nonene, trans-3-nonene, cis-3-nonene, trans-4-nonene, cis-4-nonene, 1-decene, trans-2-decene, cis-2-decene, trans-3-decene, cis-3-decene, trans-4-decene, cis-4-decene, trans-5-decene, cis-5-decene, 4-methyl-1-pentene, and vinylcyclohexane.

### (Plasticizer)

The interlayer film may further contain a plasticizer. The interlayer film has one or two or more resin layers as described above, and each resin layer may contain a plasticizer in addition to the thermoplastic resin. Therefore, the filler-containing resin layer should contain a plasticizer.

By containing the plasticizer, the interlayer film is flexible and, as a result, improves the flexibility of laminated glass and also improves the penetration resistance. Further, it is also possible to enhance adhesiveness to a laminated glass member. The plasticizer is particularly effective when contained when a polyvinyl acetal resin is used as the thermoplastic resin. Therefore, the resin layers such as the filler-containing resin layer more preferably contain a polyvinyl acetal resin and a plasticizer.

Examples of the plasticizer include organic ester plasticizers such as a monobasic organic acid ester and a polybasic organic acid ester, and phosphorus-based plasticizers such as an organic phosphate-based plasticizer and an organic phosphite-based plasticizer. Among them, organic ester plasticizers are preferred.

Examples of the organic ester plasticizers include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, triethylene glycol di-n-heptanoate, tetraethylene glycol di-n-heptanoate, triethylene glycol di-2-ethylbutyrate, dihexyl adipate, dioctyl adipate, hexylcyclohexyl adipate, diisononyl adipate, heptylnonyl adipate, dibutyl sebacate, an oil-modified sebacic alkyd, a mixture of a phosphate and an adipate, and a mixed adipate. Examples of the mixed adipate include an adipate made from two or more alcohols selected from the group consisting of an alkyl alcohol having 4 to 9 carbon atoms and a cyclic alcohol having 4 to 9 carbon atoms.

Among the above plasticizers, triethylene glycol-di-2-ethylhexanoate (3GO) is particularly preferably used.

The content of the plasticizer of the interlayer film is not particularly limited but is preferably 10 parts by mass or more and 100 parts by mass or less based on 100 parts by mass of the thermoplastic resin. When the content of the plasticizer is 10 parts by mass or more, laminated glass is moderately flexible, and the penetration resistance, adhesiveness and the like are good. When the content of the plasticizer is 100 parts by mass or less, the separation of the plasticizer from the interlayer film is prevented. The content of the plasticizer is more preferably 20 parts by mass or more, further preferably 30 parts by mass or more, and further preferably 35 parts by mass or more, and more preferably 70 parts by mass or less, further preferably 63 parts by mass or less.

The interlayer film contains one or more resin layers, and when each resin layer such as a filler-containing resin layer contains the plasticizer, the preferred values of the content of the plasticizer in each resin layer are also the same as the preferred values of the content of the plasticizer described above.

In the interlayer film, the resin or the resin and the plasticizer are main components, and in the interlayer film, the total amount of the thermoplastic resin and the plasticizer is usually 70% by mass or more, preferably 80% by mass or more, and further preferably 90% by mass or more and less than 100% by mass based on the total amount of the interlayer film. By setting the total amount at less than 100% by mass, the interlayer film can contain an additive such as the colorant.

Also in each resin layer, the resin or the resin and the plasticizer are main components, and in each resin layer, the total amount of the thermoplastic resin and the plasticizer is usually 70% by mass or more, preferably 80% by mass or more, and further preferably 90% by mass or more and less than 100% by mass based on the total amount of each resin layer.

### [Other Additives]

The interlayer film of the present invention may contain other additive(s) than the above, and may contain each additive such as an ultraviolet absorbent, an antioxidant, a light stabilizing agent, an adhesion modifier, a heat shielding agent, a fluorescent brightening agent, and a crystal nucleating agent. The interlayer film of the present invention has one or two or more resin layers as described above, and each resin layer may appropriately contain at least one selected from the group consisting of these additives.

### <Layer Configuration>

The layer configuration of the interlayer film of the present invention will be described in more detail below.

In the present invention, the interlayer film may have a single-layer resin layer. When the interlayer film has a single-layer resin layer, the resin layer is a filler-containing resin layer containing a thermoplastic resin and a filler (A). For the single-layer resin layer, both surfaces of the resin layer should be respectively adhered to glass plates constituting a laminated glass member.

### (Multilayer Structure)

The interlayer film may have a multilayer structure including a plurality of resin layers, as described above. The multilayer structure composed of the plurality of resin layers may be a two-layer structure in which two resin layers are laminated in the thickness direction, a three-layer structure in which three resin layers are laminated, or one in which four or more resin layers are laminated. Among these, the interlayer film preferably has a two- to five-layer structure, and further preferably a two- to three-layer structure. In the case of a multilayer structure, at least one resin layer may be a filler-containing resin layer containing the filler (A), and two or more resin layers may be each a filler-containing resin layer. The filler-containing resin layer may be disposed as the outermost surface adhering to a glass plate or may be disposed between other resin layers and disposed as any other than the outermost surface, in the multilayer structure.

When the interlayer film is a multilayer structure, the interlayer film preferably includes, for example, two skin layers provided on surfaces and a core layer provided between the skin layers, and in that case, the interlayer film is preferably a three-layer structure. Any one of or both the skin layers should be filler-containing resin layer(s), and both the skin layers are more preferably filler-containing resin layers. In addition, the core layer may be a resin layer other than a filler-containing resin layer.

The resins used in the skin layers and the core layer are each preferably a polyvinyl acetal resin, and more preferably a polyvinyl butyral resin.

Each of the skin layers and the core layer preferably contains a plasticizer as described above. The content of the plasticizer in the core layer based on 100 parts by mass of the thermoplastic resin is preferably higher than the content of the plasticizer in the skin layers based on 100 parts by mass of the thermoplastic resin, and the difference between these contents is preferably 5 parts by mass or more and 60 parts by mass or less, more preferably 10 parts by mass or more and 50 parts by mass or less, and further preferably 15 parts by mass or more and 35 parts by mass or less. By allowing the content of the plasticizer in the core layer to be higher, sound insulation performance is easily enhanced.

The amount of hydroxyl groups in the polyvinyl acetal resin in the core layer is preferably smaller than the amount of hydroxyl groups in the polyvinyl acetal resin in the skin layers, and the difference between these amounts of hydroxyl groups is preferably 1 mol % or more and 20 mol % or less, more preferably 2 mol % or more and 15 mol % or less, and further preferably 2 mol % or less and 10 mol % or less. By allowing the amount of hydroxyl groups in the core layer to be smaller, the content of the plasticizer is easily higher and sound insulation performance is also easily enhanced.

The filler-containing resin layer need not be provided on the entire region of the interlayer film, and may be provided on a partial region of the interlayer film. For example, when the resin layer (second resin layer) sandwiched between two resin layers (first and third resin layers) in the interlayer film having a three-layer structure is the filler-containing resin layer, the filler-containing resin layer may be provided in a partial region and may not be provided in other regions.

In this case, a region where the filler-containing resin layer is provided should have a three-layer structure of the first to third resin layers and a region where no filler-containing resin layer is provided should have a two-layer structure of the first and third resin layers. When the first and third resin layers has the same composition, the first resin layer and the third resin layer can be integrated and the boundary thereof cannot be distinguished in some cases, and substantially one resin layer may be formed.

While the interlayer film having a three-layer structure is described as an example in the above description, the filler-containing resin layer may also be similarly provided in only a partial region in a structure of four or more layers.

The thickness of the filler-containing resin layer may be fixed or changed. For example, as described above, the filler-containing resin layer provided in a partial region of the interlayer film may have a cross-sectional shape which has a smaller thickness as it is closer to a region where the filler-containing resin layer is not provided.

The interlayer film may have a cross-sectional rectangular shape and a fixed thickness, but the cross-sectional shape of the interlayer film is not limited to a cross-sectional rectangular shape, and the interlayer film may have, for example, a wedge shape. An interlayer film having a wedge shape has a cross section where one end and the other end opposite to the one end have different thicknesses from each other, and the cross section may have, for example, a trapezoidal shape, but may have a triangular shape. For the wedge-shaped interlayer film, the thickness changes from one end toward other end, but the thickness need not change in all portions, and the interlayer film has a portion where the thickness is fixed and the portion where the thickness changes may be partial.

### [Thickness of Each Layer]

The thickness of the filler-containing resin layer is preferably 0.15 mm or more and 2.0 mm or less, more preferably 0.2 mm or more and 1.5 mm or less, and preferably 0.25 mm or more and 0.9 mm or less. By adjusting the content of the filler (A) within the above range and also adjusting the thickness within such a range, both the transparency and the metallic feeling of the interlayer film are easily made good.

The thickness of the interlayer film is preferably 0.2 mm or more and 2.5 mm or less, more preferably 0.25 mm or more and 2.0 mm or less, and further preferably 0.3 mm or more and 1.0 mm or less.

In a multilayer structure, the thickness of the filler-containing resin layer is not particularly limited but is, for example, 0.06 or more and 0.9 or less, preferably 0.08 or more and 0.8 or less, and more preferably 0.1 or more and 0.7 or less to the total thickness of the interlayer film in thickness ratio (filler-containing resin layer/total thickness).

The filler-containing resin layer and the interlayer film may be changed in thickness as described above, and in that case, the above-described thicknesses of the filler-containing resin layer and the interlayer film respectively mean the thicknesses of portions where the filler-containing resin layer and the interlayer film are the thickest (thickest portion). The thickness of the filler-containing resin layer means the total thickness when the filler-containing resin layer has two or more layers.

### [Optical Properties of Interlayer film]

For the interlayer film of the present invention, the haze (Hz) of laminated glass made by adhering two clear glass plates to each other via the interlayer film is preferably 20% or less. By setting the haze (Hz) at 20% or less, laminated glass suppressed in light scattering, high in transparency, and less in cloudiness is easily obtained. The above haze (Hz) is more preferably 16% or less, further preferably 10% or less, and still further preferably 8% or less. As the above haze (Hz) becomes lower, it becomes better from the viewpoint of securement of transparency and from the viewpoint of suppression of cloudiness, and the above haze should be 0% or more and is preferably 0.5% or more in practical use. The haze can be measured in accordance with JIS K6714.

For the interlayer film of the present invention, the visible light transmittance (Tv) of laminated glass made by adhering two clear glass plates to each other via the interlayer film is preferably 30% or more, more preferably 40% or more, and further preferably 58% or more from the viewpoint of transparency, and is still further preferably 70% or more and still further preferably 75% or more from the viewpoint of ease of application to window glass (for example, front glass and side front glass) for automobiles. As the visible light transmittance (Tv) becomes higher, it becomes better from the viewpoint of transparency, but the light transmittance is, for example, 99% or less, preferably 95% or less, and more preferably 90% or less in order to allow a certain amount of visible light to be reflected for exhibition of a sufficient metallic feeling. The visible light transmittance (Tv) can be measured in accordance with JIS R3212 (2015).

For the interlayer film of the present invention, the visible light reflectance (Rv) of laminated glass made by adhering two clear glass plates to each other via the interlayer film is preferably 1% or more and 35% or less. By setting the visible light reflectance (Rv) at 1% or more, the laminated glass easily exhibits a sufficient metallic feeling. By setting the visible light reflectance at 35% or less, the interlayer film can be prevented from imparting more reflection than necessary, and transparency can be prevented from being impaired and laminated glass can be prevented from being cloudy.

From the above viewpoints, the visible light reflectance (Rv) is more preferably 5% or more, further preferably 8% or more and still further preferably 10% or more, and more preferably 28% or less, further preferably 22% or less and still further preferably 18% or less. The visible light reflectance (Rv) can be measured with a spectrophotometer in accordance with JIS 3106 (2019).

The ratio (Rv/Hz) of the visible light reflectance (Rv) to the above haze (Hz) is, for example, 1.6 or more, and is preferably 2 or more, more preferably 2.5 or more, and further preferably 3 or more. When the ratio (Rv/Hz) is higher, light reflection is dominant over light scattering, and not only a good transparency is ensured and cloudiness of laminated glass is suppressed, but also a metallic feeling is easily exhibited. The ratio (Rv/Hz) is preferably 10 or less, more preferably 8 or less, and further preferably 6 or less from the viewpoint of practical use and from the viewpoint of suppression of more reflection than necessary in the interlayer film.

The clear glass plates used in the measurement of the visible light reflectance (Rv), visible light transmittance (Tv), and haze (Hz) have a thickness of 2.5 mm and have a visible light transmittance of 90.5% as measured in accordance with JIS R 3106: 1998. For the clear glass plates, a* = -0.6, b* = 0.2, and the haze is 0.2% or less using the CIE standard illuminant D65 and the color matching functions for a field of view of 10° prescribed in JIS Z 8781-1 (2012), JIS Z 8781-2 (2012), and JIS Z 8781-4 (2013). The clear glass plates are also referred to as standard clear glass.

The interlayer film may have a region where no filler (A) is contained or may be changed in thickness of the filler-containing resin layer, and in that case, the above Rv, Tv, and haze (Hz) should be measured in a region where the thickness of the filler-containing resin layer is largest.

Furthermore, the Rv, the Tv and the haze (Hz), and the Rv/Hz should be determined by measuring spectroscopic characteristics of any one surface of laminated glass.

### (Method for Producing Interlayer film)

When the interlayer film of the present invention is a single-layer structure, for example, it is recommended that the thermoplastic resin, the filler (A), and additives other than the filler (A), blended as needed, be mixed, and the obtained resin composition be formed by extrusion, compression molding, or the like to provide a resin layer, which is not particularly limited.

Here, for the filler (A), from the viewpoint of enhancing the dispersibility in the resin composition, for example, when a plasticizer is used, the filler (A) should be blended into the plasticizer, sufficiently dispersed in the plasticizer, and then mixed with a resin. At this time, a dispersant or the like may be appropriately added to the plasticizer. When an additive other than the filler (A) is used, the additive other than the filler (A) should be blended into the plasticizer depending on the type of the additive, sufficiently dispersed in the plasticizer, and then mixed with the thermoplastic resin.

Even when the interlayer film is a multilayer structure, as in the case of a single-layer structure, each resin layer should be formed by extrusion, compression molding, or the like, and laminated. For example, a method is preferred in which two or more extruders are provided, a multilayer feed block is attached to the tips of the plurality of extruders, and coextrusion is performed. When a plurality of resin layers are provided, and there are two or more resin layers having the same composition, the two or more resin layers having the same composition may be extruded from one extruder. Further, for the resin layers, the thickness may change along the direction orthogonal to the thickness direction, and in that case, the thickness should be changed, for example, by adjusting the amount of the resin supplied, or the like.

When the filler (A) has an orientable anisotropy, for example, as in the case of having a flat plate shape, the filler (A) can be oriented by the above compression molding, extrusion or the like so that the longitudinal direction or surface direction thereof is along with the surface direction of the interlayer film (each resin layer).

The interlayer film may also be obtained by preparing a plurality of resin layers, disposing the plurality of resin layers between a pair of laminated glass members to obtain a laminated body, and performing thermocompression molding (compression molding) of the laminated body to produce laminated glass and also produce the interlayer film together.

### <Laminated Glass>

The present invention further provides a laminated glass. The laminated glass includes two laminated glass members (first and second laminated glass members), and an interlayer film disposed between these laminated glass members. The two laminated glass members are adhered to each other via the interlayer film. For the interlayer film, one surface is adhered to one laminated glass member, and the other surface is adhered to the other laminated glass member. The configuration of the interlayer film is as described above.

The laminated glass should be produced by disposing the above-described interlayer film between two laminated glass members and integrating these by thermocompression molding or the like. The laminated glass may also be produced by preparing a plurality of resin layers and disposing the plurality of resin layers between a pair of laminated glass members to obtain a laminated body, and integrating these by thermocompression molding or the like of the laminated body.

### (Laminated Glass Member)

Examples of the laminated glass members used in the laminated glass include glass plates, and the glass plates may be any of inorganic glass and organic glass, and are preferably inorganic glass. The inorganic glass is not particularly limited, and examples thereof include clear glass, float plate glass, polished plate glass, figured glass, mesh wire glass, line wire glass, and green glass.

As the organic glass, organic glass referred to as resin glass is generally used. The organic glass is not particularly limited, and examples thereof include organic glass composed of a resin such as a polycarbonate, an acrylic resin, an acrylic copolymer resin, or a polyester.

The two laminated glass members may be composed of the same type of material as each other or may be composed of different materials. For example, it is possible that one is inorganic glass and the other is organic glass, but it is preferred that both the two laminated glass members be inorganic glass or organic glass.

The thickness of each laminated glass member is not particularly limited but are, for example, about 0.1 to 15 mm, preferably 0.5 to 5 mm. The thickness of each laminated glass member may be the same as each other or may be different but are preferably the same.

### [Optical Properties of Laminated Glass]

The laminated glass of the present invention should have the same optical properties as the optical properties described for the interlayer film, from the same viewpoint as described above. Specifically, the haze (Hz) of the laminated glass is preferably 20% or less, more preferably 16% or less, further preferably 10% or less, and still further preferably 8% or less. As the haze (Hz) of the laminated glass becomes lower, it becomes better, and the haze should be 0% or more and is preferably 0.5% or more.

The visible light transmittance (Tv) of the laminated glass is preferably 30% or more, more preferably 40% or more, further preferably 58% or more, still further preferably 70% or more and still further preferably 75% or more, and, for example, 99% or less, preferably 95% or less and more preferably 90% or less.

The visible light reflectance (Rv) of the laminated glass is preferably 1% or more and 35% or less. The visible light reflectance (Rv) of the laminated glass is more preferably 5% or more, further preferably 8% or more and still further preferably 10% or more, and more preferably 28% or less, further preferably 22% or less and still further preferably 18% or less.

The ratio (Rv/Hz) of the visible light reflectance (Rv) to the haze (Hz) of the laminated glass is, for example, 1.6 or more, preferably 2 or more, more preferably 2.5 or more and further preferably 3 or more, and preferably 10 or less, more preferably 8 or less and further preferably 6 or less.

The laminated glass of the present invention can be used as window glass for various vehicles such as automobiles, conveyances such as aircraft and ships, buildings, and the like but is preferably used as automobile laminated glass. The automobile laminated glass may be any of windshield glass (front glass), side glass, rear glass, and roof glass.

### Examples

The present invention will be described in more detail by Examples, but the present invention is not limited in any way by these examples.

The measurement methods and the evaluation methods in the present Examples are as follows.

### [Rv]

The visible light reflectance (Rv) was determined in accordance with JIS 3106 (2019) using a spectrophotometer ("U-4100" manufactured by Hitachi High-Technologies Corporation).

### [Ra* and Rb*]

The spectral reflectance was measured with a spectrophotometer ("U-4100" manufactured by Hitachi High-Technologies Corporation). The Ra* and Rb* with a D65 light source in a field of view of 10° were calculated from the spectral reflectance obtained under the measurement conditions of a scan speed of 300 nm/min and a slit width of 8 nm, in accordance with JIS Z 8781 (2009).

### [Tv]

The visible light transmittance (Tv) was determined in accordance with JIS R 3212(2015) using a spectrophotometer ("U-4100" manufactured by Hitachi High-Technologies Corporation).

### [Ta* and Tb*]

The spectral transmittance was measured with a spectrophotometer ("U-4100" manufactured by Hitachi High-Technologies Corporation). The Ta* and Tb* with a D65 light source in a field of view of 10° were calculated from the spectral transmittance obtained under the measurement conditions of a scan speed of 300 nm/min and a slit width of 8 nm, in accordance with JIS Z 8781 (2009).

### [Haze]

The haze was determined by measurement of the obtained laminated glass from one surface of laminated glass in accordance with JIS K6714.

The components used in the Examples and Comparative Examples are as follows.
(1) Thermoplastic Resin
   PVB-1: polyvinyl butyral resin, degree of acetalization 69 mol %, amount of hydroxyl groups
   30 mol %, degree of acetylation 1 mol %, average degree of polymerization of PVA used for synthesis 1700
   PVB-2: polyvinyl butyral resin, degree of acetalization 64 mol %, amount of hydroxyl groups 24 mol %, degree of acetylation 12 mol %, average degree of polymerization of PVA used for synthesis 1700
(2) Plasticizer
   3GO: triethylene glycol di-2-ethylhexanoate
(3) Filler
   Multilayer filler 1: flat plate shape of three-layer structure shown in Fig. 1, including SiO₂ layer (refractive index 1.46) as medium layer and TiO₂ layers (refractive index 2.49) as covering layers, thickness ratio (each covering layer : medium layer =1:8), D50: 14 µm, thickness 0.5 µm, aspect ratio: 2.8
   Multilayer filler 2: flat plate shape of three-layer structure shown in Fig. 1, including SiO₂ layer (refractive index 1.46) as medium layer and TiO₂ layers (refractive index 2.49) as covering layers, thickness ratio (each covering layer : medium layer =1:9), D50: 14 µm, thickness 0.5 µm, aspect ratio: 2.8
   Multilayer filler 3: "Colorstream T20-01 WNT" manufactured by MERCK & Co., filler of SiO₂ layer as medium layer and TiO₂ layer as covering layer
   Aluminum: "EMR-DZ485" manufactured by Toyo Aluminium K.K., aluminum flake Mica: "Iriodin 6163" manufactured by MERCK & Co., plate-shaped mica

### [Example 1]

### (Making of Interlayer film)

The filler (A) was mixed with the plasticizer according to blending in Table 1 and dispersed therein, these were loaded together with the polyvinyl butyral resin (PVB-1) to an extruder and kneaded in the extruder and extruded to obtain an interlayer film having a thickness of 760 µm. The interlayer film was an interlayer film including a single-layer resin layer, and the filler (A) was oriented so that the surface direction thereof was along with the surface direction of the interlayer film.

### [Example 12]

### (Making of Interlayer film)

The polyvinyl butyral resin (PVB-2) including no filler (A) was together loaded according to blending in Table 1, to the coextruder, and these were kneaded in the coextruder to obtain a resin composition for forming a core resin layer. The resin composition was coextruded with the coextruder to obtain an interlayer film including a skin resin layer having a thickness of 760 µm, in which the filler (A) was dispersed, and a core resin layer including no filler (A) and having a thickness of 760 µm. The filler (A) in the interlayer film was oriented so that the surface direction thereof was along with the surface direction of the interlayer film.

### (Making of Laminated Glass)

Two clear glasses were provided. Each was 100 mm long by 100 mm wide by 2.5 mm thick. As the clear glasses, the standard clear glasses described herein were used. The interlayer film obtained above was sandwiched between the two clear glasses, and temporarily pressure-bonded by a vacuum packing method. The temporarily pressure-bonded laminated body was retained in an autoclave under conditions of a temperature of 140°C and a pressure of 1.2 MPa for 20 minutes, and then mainly pressure-bonded with a temperature drop to 23°C and returning to atmospheric pressure, to obtain laminated glass in which the two clear glasses were adhered by the interlayer film. For the obtained laminated glass, the optical properties were measured and are shown in Table 1 as the properties of the interlayer film and the laminated glass.

### [Examples 2 to 11 and Comparative Examples 1 to 4]

Operations were carried out in the same manner as Example 1 except that the type of the filler and the amount of the filler added were changed as described in Tables 1 and 2.

### [Examples 13 to 14]

Operations were carried out in the same manner as Example 12 except that the type of the filler and the amount of the filler added were changed as described in Table 2.

**[Table 1]**

| | | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|---|
| Interlayer film | Resin | Type | - | PVB-1 | PVB-1 | PVB-1 | PVB-1 | PVB-1 | PVB-1 | PVB-1 | PVB-1 | PVB-1 | PVB-1 | PVB-1 |
| | | Number of parts | phr | 100 | 100 | 100 | 100 | 100 | 100 | 100 | 100 | 100 | 100 | 100 |
| | Plasticizer | Type | - | 3GO | 3GO | 3GO | 3GO | 3GO | 3GO | 3GO | 3GO | 3GO | 3GO | 3GO |
| | | Number of parts | phr | 40 | 40 | 40 | 40 | 40 | 40 | 40 | 40 | 40 | 40 | 40 |
| | Filler | Type | - | Multilayer filler 1 | Multilayer filler 1 | Multilayer filler 1 | Multilayer filler 1 | Multilayer filler 2 | Multilayer filler 2 | Multilayer filler 2 | Multilayer filler 2 | Multilayer filler 3 | Multilayer filler 3 | Multilayer filler 3 |
| | | Concentration | wt% | 0.05 | 0.1 | 0.15 | 0.4 | 0.05 | 0.1 | 0.15 | 0.4 | 0.05 | 0.1 | 0.15 |
| Evaluation | Rv | | % | 10.2 | 11.9 | 13.3 | 21.2 | 12.4 | 15.9 | 18.6 | 34.0 | 10.8 | 12.9 | 14.9 |
| | Ra* | | - | 39.1 | 42.7 | 45.1 | 60.2 | 5.8 | 9.2 | 11.1 | 24.7 | 6.4 | 10.6 | 13.9 |
| | Rb* | | - | -4.6 | -7.3 | -8.7 | -19.1 | -2.1 | -2.8 | -3.0 | -5.4 | -8.0 | -12.0 | -16.1 |
| | Tv | | % | 84.8 | 81.2 | 77.7 | 59.8 | 82.3 | 75.9 | 71.9 | 45.4 | 84.4 | 81.2 | 78.0 |
| | Ta* | | - | 0.0 | 1.4 | 2.4 | 8.4 | -3.8 | -5.9 | -7.4 | -16.5 | -3.8 | -5.7 | -7.6 |
| | Tb* | | - | 2.4 | 3.5 | 4.7 | 10.7 | 2.6 | 3.8 | 4.6 | 9.7 | 4.7 | 7.6 | 10.4 |
| | Haze | | % | 1.82 | 3.22 | 4.66 | 11.8 | 2.13 | 4.34 | 5.82 | 15.2 | 1.3 | 2.2 | 4.2 |
| | Rv/Haze | | - | 5.58 | 3.71 | 2.85 | 1.80 | 5.83 | 3.67 | 3.19 | 2.24 | 8.36 | 5.93 | 3.56 |

**[Table 2]**

| | | | | Example 12 | Example 13 | Example 14 | | | | | | Comparative Example 1 | Comparative Example 2 | Comparative Example 3 | Comparative Example 4 |
|---|---|---|---|---|---|---|---|---|---|---|---|---|---|---|---|
| Interlayer film (core layer) | Resin | Type | - | PVB-2 | PVB-2 | PVB-2 | | Interlayer film | Resin | Type | - | PVB | PVB | PVB | PVB |
| | | Number of parts | phr | 100 | 100 | 100 | | | | Number of parts | phr | 100 | 100 | 100 | 100 |
| | Plasticizer | Type | - | 3GO | 3GO | 3GO | | | Plasticizer | Type | - | 3GO | 3GO | 3GO | 3GO |
| | | Number of parts | phr | 60 | 60 | 60 | | | | Number of parts | phr | 40 | 40 | 40 | 40 |
| | Filler | Type | - | - | - | - | | | Filler | Type | - | Aluminum | Aluminum | Mica | Mica |
| | | Concentration | wt% | - | - | - | | | | Concentration | wt% | 0.03 | 0.15 | 0.03 | 0.15 |
| Interlayer film (skin layer) | Resin | Type | - | PVB-1 | PVB-1 | PVB-1 | | Evaluation | Rv | | % | 35.5 | 48.2 | 24.3 | 14.9 |
| | | Number of parts | phr | 100 | 100 | 100 | | | Ra* | | - | -1.5 | -1.7 | -2.5 | -0.9 |
| | Plasticizer | Type | - | 3GO | 3GO | 3GO | | | Rb* | | - | 0.3 | -0.3 | -2.4 | 1.8 |
| | | Number of parts | phr | 40 | 40 | 40 | | | Tv | | % | 32.2 | 1.9 | 56.8 | 2.19 |
| | Filler | Type | - | Multilayer filler 1 | Multilayer filler 2 | Multilayer filler 3 | | | Ta* | | - | 1.2 | 1.7 | 1.7 | 3.1 |
| | | Concentration | wt% | 0.15 | 0.15 | 0.15 | | | Tb* | | - | 2.3 | 3.6 | 2.9 | 4.1 |
| Evaluation | Rv | | % | 22.1 | 30.5 | 25.9 | | | Haze | | % | 30.2 | 75.5 | 16.7 | 17.7 |
| | Ra* | | - | 54.2 | 20.5 | 22.8 | | | Rv/Haze | | - | 1.17 | 0.64 | 1.46 | 0.84 |
| | Rb* | | - | -17.2 | -4.2 | -23.1 | | | | | | | | | |
| | Tv | | % | 60.1 | 55.6 | 59.8 | | | | | | | | | |
| | Ta* | | - | 5.3 | -15.3 | -15.6 | | | | | | | | | |
| | Tb* | | - | 9.0 | 8.8 | 17.6 | | | | | | | | | |
| | Haze | | % | 8.4 | 10.5 | 7.8 | | | | | | | | | |
| | Rv/Haze | | - | 2.82 | 2.92 | 3.32 | | | | | | | | | |

| | | | | | | | | | | | | | | | |
|---|---|---|---|---|---|---|---|---|---|---|---|---|---|---|---|
| * phr is parts by mass based on 100 parts by mass of PVB. * wt% is the content (% by mass) in the interlayer film (resin layer). | | | | | | | | | | | | | | | |

As shown in Table 1, by containing the filler (A) having visible light reflection performance in the interlayer film in each of Examples, laminated glass could be obtained which had a proper visible light reflectance (Rv) and a high visible light transmittance (Tv), also had a low haze, and had both transparency and a metallic feeling.

On the other hand, the interlayer film in each Comparative Example contained a brightener other than the filler (A), and thus Comparative Examples 1 and 2 did not achieve a proper visible light reflectance (Rv). Comparative Examples 1 to 4 exhibited a high haze and a low Rv/Hz to cause increased light scattering, thereby not enabling any laminated glass having both transparency and a metallic feeling to be obtained.

### Reference Signs List

10 medium layer
11, 12 covering layer

## Claims

1. An interlayer film for laminated glass, comprising a thermoplastic resin and a filler (A) having visible light reflection performance.

2. The interlayer film for laminated glass according to claim 1, wherein the filler (A) comprises two or more metal oxides.

3. The interlayer film for laminated glass according to claim 2, wherein the two or more metal oxides have refractive indexes different from each other.

4. The interlayer film for laminated glass according to claim 3, wherein a refractive index difference between the metal oxides having different refractive indexes from each other is 0.1 or more and 1.2 or less.

5. The interlayer film for laminated glass according to any one of claims 2 to 4, wherein the two or more metal oxides are each selected from the group consisting of titanium oxide, silicon oxide, indium oxide, niobium oxide, zinc oxide, antimony oxide, and tungsten oxide.

6. The interlayer film for laminated glass according to any one of claims 2 to 5, wherein the filler (A) has a multilayer structure of the metal oxides.

7. The interlayer film for laminated glass according to claim 6, wherein a thickness ratio between layers formed by metal oxides different from each other is 1:2 to 1:15 in the filler (A).

8. The interlayer film for laminated glass according to any one of claims 1 to 7, comprising a resin layer comprising the filler (A) and the thermoplastic resin, wherein
a content of the filler (A) in the resin layer is 0.01% by mass or more and 0.5% by mass or less.

9. The interlayer film for laminated glass according to any one of claims 1 to 8, wherein the filler (A) has a flat plate shape.

10. The interlayer film for laminated glass according to any one of claims 1 to 9, wherein an average particle diameter (D50) of the filler (A) is 1 µm or more and 20 µm or less.

11. The interlayer film for laminated glass according to any one of claims 1 to 10, wherein a ratio (Rv/Hz) of a visible light reflectance (Rv) to a haze (Hz), measured for laminated glass made by adhering two clear glass plates to each other via the interlayer film for laminated glass, is 2 or more and 10 or less.

12. The interlayer film for laminated glass according to any one of claims 1 to 11, wherein a haze value (Hz) measured for laminated glass made by adhering two clear glass plates to each other via the interlayer film for laminated glass is 20% or less.

13. A laminated glass comprising a first laminated glass member, a second laminated glass member, and the interlayer film for laminated glass according to any one of claims 1 to 12, wherein
the interlayer film for laminated glass is disposed between the first laminated glass member and the second laminated glass member.
